# EUROPÄISCHE PATENTSCHRIFT

(11) **EP 1 192 343 B1**
(45) Veröffentlichungstag und Bekanntmachung des Hinweises auf die Patenterteilung: **15.09.2004**
(21) Anmeldenummer: 00941989.6
(22) Anmeldetag: 26.05.2000
(51) Int. Cl.: F02D 41/02

(54) **VERFAHREN ZUR INITIIERUNG UND ÜBERWACHUNG EINER ENTSCHWELFELUNG VON WENIGSTENS EINEM IN EINEM ABGASKANAL EINER VERBRENNUNGSKRAFTMASCHINE ANGEORDNETEN NOx-SPEICHERKATALYSATOR**
METHOD FOR INITIATING AND MONITORING A DESULFURIZATION OF AT LEAST ONE NOx STORAGE-TYPE CATALYTIC CONVERTER ARRANGED IN AN EXHAUST CHANNEL OF AN INTERNAL COMBUSTION ENGINE
PROCEDE PERMETTANT DE LANCER ET DE SURVEILLER LA DESULFURATION D'AU MOINS UN CATALYSEUR A STOCKAGE DE NOx PLACE DANS UN TUYAU D'ECHAPPEMENT D'UN MOTEUR A COMBUSTION INTERNE

(30) Priorität: 09.06.1999 DE 19926146
(43) Veröffentlichungstag der Anmeldung: 03.04.2002
(73) Patentinhaber: Volkswagen Aktiengesellschaft, 38436 Wolfsburg (DE)
(72) Erfinder: POTT, Ekkehard, D-38518 Gifhorn (DE); GOTTSCHLING, Martina, D-38114 Braunschweig (DE)
(74) Vertreter: Reinstädler, Diane
(86) Internationale Anmeldenummer: PCT/EP2000/004814
(87) Internationale Veröffentlichungsnummer: WO 2000/077372

(56) Entgegenhaltungen:
- DE-A- 19 731 624
- DE-C- 19 830 829
- PATENT ABSTRACTS OF JAPAN vol. 1999, no. 09, 30. Juli 1999 (1999-07-30) & JP 11 117786 A (MITSUBISHI MOTORS CORP), 27. April 1999 (1999-04-27)
- PATENT ABSTRACTS OF JAPAN vol. 1999, no. 09, 30. Juli 1999 (1999-07-30) & JP 11 107840 A (HITACHI LTD), 20. April 1999 (1999-04-20)

## Beschreibung

Die Erfindung betrifft ein Verfahren zur Initiierung und Überwachung einer Entschwefelung von wenigstens einem in einem Abgaskanal einer Verbrennungskraftmaschine angeordneten NO_{X}-Speicherkatalysator mit den im Oberbegriff des Anspruchs 1 genannten Merkmalen.

Es ist bekannt, zur Reinigung eines Abgases der Verbrennungskraftmaschine Katalysatoren in dem Abgaskanal der Verbrennungskraftmaschine anzuordnen. Während eines Verbrennungsvorgangs eines Luft-Kraftstoff-Gemisches entstehen unter anderem gasförmige Schadstoffe, wie Stickoxide NO_{X} (Oxidationsmittel), Kohlenmonoxid CO und unverbrannte Kohlenwasserstoffe HC (Reduktionsmittel), die an den Katalysatoren in weniger umweltrelevante Reaktionsprodukte konvertiert werden können. Dabei hat es sich als vorteilhaft erwiesen, wenigstens einen der Katalysatoren in Form eines NO_{X}-Speicherkatalysators in ein insgesamt im Abgaskanal angeordnetes Katalysatorsystem einzubringen.

Unter einem Arbeitsmodus der Verbrennungskraftmaschine mit < 1 überwiegt eine Konzentration reduzierender Gaskomponenten, wie CO, HC oder H₂, eine Konzentration von Sauerstoff (fette Atmosphäre). Bei λ > 1 ist die Sauerstoffkonzentration dominierend (magere Atmosphäre). Das NO_{X} wird am Speicherkatalysator mit den Reduktionsmitteln umgesetzt. In einem ausreichenden Maße ist dies allerdings nur unter einem Arbeitsmodus mit λ < 1 möglich. Bei > 1 wird das NO_{X} dagegen solange von dem Speicherkatalysator absorbiert, bis eine NO_{X}-Desorptionstemperatur oder eine NO_{X}-Speicherbeladung erreicht wird. Vor diesem Zeitpunkt muß daher wieder ein Wechsel in den Arbeitsmodus mit λ ≤ 1 stattfinden und der Speicherkatalysator regeneriert werden (NO_{X}-Regeneration).

Während eines Betriebes der Verbrennungskraftmaschine werden neben NO_{X}, durch eine Verbrennung wechselnder Schwefelanteile im Kraftstoffgemisch, Schwefeloxide SO_{X} gebildet. Diese werden ebenso wie das NO_{X} in magerer Atmosphäre von dem NO_{X}-Speicherkatalysator absorbiert, wobei die SO_{X}-Absorption zur Bildung von lokalen Inhomogenitäten infolge einer Sulfatkornbildung führen kann. Dieser Prozeß kann zu einer Reduzierung einer katalytisch aktiven Oberfläche und einer Verminderung der Kapazität des NO_{X}-Speicherkatalysators führen und bietet einen Angriffspunkt für korrosive Prozesse, die eine dauerhafte Schädigung des NO_{X}-Speicherkatalysators nach sich ziehen können.

Es ist daher bekannt, die Entschwefelung in wiederkehrenden Zyklen zu initiieren, wobei eine Feststellung einer Entschwefelungsnotwendigkeit anhand eines vorgebbaren Verschwefelungsgrades des NO_{X}-Speicherkatalysators festgelegt werden kann. Ein solcher Verschwefelungsgrad läßt sich beispielsweise anhand eines NO_{X}-Umsatzes bestimmen, der ein Verhältnis der Konzentrationen von NO_{X} vor dem NO_{X}-Speicherkatalysator und nach dem NO_{X}-Speicherkatalysator wiedergibt. Nach Feststellung der Entschwefelungsnotwendigkeit werden dann geeignete Maßnahmen, beispielsweise eine Spätzündung, eine Nacheinspritzung während oder nach einem Verbrennungsvorgang oder eine zylinderselektive Vertrimmung der Verbrennungskraftmaschine, durchgeführt, um die sogenannten Regenerationsparameter einzustellen. Als Regenerationsparameter für die Entschwefelung dienen unter anderem eine Mindesttemperatur am NO_{X}-Speicherkatalysator und ein Arbeitsmodus der Verbrennungskraftmaschine mit λ ≤ 1. Da ein Aufheizen auf die Mindesttemperatur und ein Betrieb der Verbrennungskraftmaschine bei fetter Atmosphäre zu einem erhöhten Kraftstoffverbrauch führen, sind möglichst kurze Entschwefelungszeiten bevorzugt. Weiterhin können die hohen Temperaturen während der Entschwefelung eine verstärkte Alterung des NO_{X}-Katalysators bewirken.

Aus der DE 197 47 222 C1 ist bekannt, eine Schwefelvergiftung eines NO_{X}-Speicherkatalysators anhand einer durch einen nachgeschalteten NO_{X}-Sensor gemessenen, vergleichsweise schnell ansteigenden NO_{X}-Konzentration zu erkennen und eine Desulfatisierungsphase zu aktivieren. Es wird demnach ein Verlauf der NO_{X}-Konzentration stromab des NO_{X}-Speicherkatalysators mit einem Soll-Verlauf verglichen und bei Überschreitung einer gewissen Abweichung eine Entschwefelung eingeleitet, Vergleiche mit Anspruch 1, erster Teil.

Nachteilig an den bekannten Verfahren ist, daß keine Überwachung einer Wirksamkeit der Entschwefelung der NO_{X}-Speicherkatalysatoren erfolgt. Zum einen können dadurch unnötig lange Entschwefelungszeiten vorgegeben werden, die zu einem erhöhten Kraftstoffverbrauch führen und zudem die thermische Alterung des NO_{X}-Speicherkatalysators beschleunigen können. Zum anderen kann ein Teilentschwefelungszustand, das heißt der Verschwefelungsgrad nach Entschwefelung, nicht erfaßt werden. Solche Teilentschwefelungszustände können aber eine wesentlich genauere Steuerung der Entschwefelung und der NO_{X}-Regeneration mit Hinsicht auf einen aktuellen Katalysatorzustand ermöglichen.

Der Erfindung liegt die Aufgabe zugrunde, ein Verfahren zur Verfügung zu stellen, das in einfacher Weise eine Überwachung und Initiierung der Entschwefelung ermöglicht. Dabei soll ein Verschwefelungsgrad nach der Entschwefelung erfaßbar sein.

Erfindungsgemäß wird diese Aufgabe durch ein Verfahren zur Überwachung einer Entschwefelung von wenigstens einem in einem Abgaskanal einer Verbrennungskraftmaschine angeordneten NO_{X}-Speicherkatalysator mit den im Anspruch 1 genannten Merkmalen gelöst. Das erfindungsgemäße Verfahren sieht vor, daß
(a) in einem mageren Arbeitsmodus der Verbrennungskraftmaschine mit λ > 1 eine Größe und/oder ein Verlauf der NO_{X}-Konzentration von einem dem NO_{X}-Speicherkatalysator nachgeschalteten NO_{X}-Sensor erfaßt und mit einer Größe und/oder einem Verlauf einer vorgebbaren NO_{X}-Sollkonzentration verglichen wird,
(b) ein erster vorgebbarer Schwellenwert für eine Größe oder einen Verlauf einer Abweichung der NO_{X}-Konzentration von der NO_{X}-Sollkonzentration gebildet wird und beim. Überschreiten des ersten Schwellenwertes . eine erste Entschwefelungsmaßnahme ergriffen wird, und
(c) ein zweiter vorgebbarer Schwellenwert für eine Größe oder einen Verlauf der Abweichung der NO_{X}-Konzentration von der NO_{X}-Sollkonzentration gebildet wird und beim Überschreiten des zweiten Schwellenwertes unmittelbar nach der ersten Entschwefelung eine zweite Entschwefelungsmaßnahme ergriffen wird.

Auf diese Weise kann bereits unmittelbar nach der ersten Entschwefelung der Verschwefelungsgrad des NO_{X}-Speicherkatalysators erneut erfaßt werden und gegebenenfalls eine zweite Entschwefelungsmaßnahme durchgeführt werden. Der so erfaßte Verschwefelungsgrad kann in besonders prozeßsicherer Weise als ein Parameter genutzt werden, der eine Notwendigkeit zur Initiierung oder Fortführung der Entschwefelung festlegt (Schwellenwert). Ebenso können die Regenerationsparameter während der Durchführung der Entschwefelung unter Beachtung des Verschwefelungsgrades neu festgelegt werden. Nach dem Ende einer

Entschwefelungsmaßnahme können die Schwellenwerte neu festgelegt werden, und zwar in Abhängigkeit von der zuvor ergriffenen Entschwefelungsmaßnahme und/oder dem vor der Entschwefelung festgelegten Schwellenwert. Auf diese Weise kann der Schwellenwert diesem aktuellen Katalysatorzustand angepaßt werden. Eine Meßwerterfassung kann dabei unmittelbar nach dem Wechsel in den mageren Arbeitsmodus oder erst nach Ablauf einer vorgebbaren Zeitspanne erfolgen.

In einer bevorzugten Ausgestaltung des Verfahrens werden die Schwellenwerte in Form eines NO_{X}-Umsatzes, der mit einem Sollumsatz von NO_{X} im NO_{X}-Speicherkatalysator verglichen wird, festgelegt. Daneben ist denkbar, die Schwellenwerte anhand eines Vergleiches eines Anstiegs einer gemessenen NO_{X}-Emission zu einer NO_{X}-Sollemission festzulegen. Auch ein Vergleich eines Emissionswertes zu einem Sollemissionswert in einem vorgebbaren Zeitpunkt ist möglich. Die Schwellenwerte können dann über eine Größe der Abweichung festgelegt werden.

Weiterhin ist vorteilhaft, die Schwellenwerte in Form einer Zeitspanne bis zum Erreichen eines vorgebbaren NO_{X}-Emissions- oder Konzentrationswertes nach dem NO_{X}-Speicherkatalysator festzulegen. Diese Zeitspanne wird dann mit einer Sollzeitspanne verglichen, und entsprechend einer Abweichung wird die Entschwefelung eingeleitet. Emissionen beschreiben hier einen Massenstrom, zum Beispiel in Gramm/Stunde, während Konzentrationen einen Volumenanteil, zum Beispiel ppm oder %, angeben.

Die NO_{X}-Sollkonzentration beziehungsweise der NO_{X}-Sollumsatz oder die NO_{X}-Sollemission können anhand eines NO_{X}-Speicherkatalysatormodells und einer gemessenen oder berechneten NO_{X}-Emission (Rohemission) der Verbrennungskraftmaschine berechnet werden. Selbstverständlich kann die NO_{X}-Sollkonzentration nach jedem Entschwefelungsvorgang wieder neu festgelegt werden und an den aktuellen Katalysatorzustand angepaßt werden. Als besonders vorteilhaft hat es sich dabei erwiesen, Abweichungen, die infolge irreversibler Schädigungen des NO_{X}-Speicherkatalysators entstanden sind, zu kompensieren. Dazu kann beispielsweise die Abweichung der NO_{X}-Konzentration (von der NO_{X}-Sollkonzentration) nach der Entschwefelung mit einer Abweichung der gleichen Art bei einer vorherigen Entschwefelung verglichen werden. Zeigen sich trotz der erneuten Entschwefelung gleiche Abweichungen, so liegt eine irreversible Schädigung des NO_{X}-Speicherkatalysators vor, und es kann entsprechend dieser Schädigung ein Korrekturwert gebildet werden, der nachfolgend in eine Neufestlegung der Schwellenwerte beziehungsweise NO_{X}-Sollkonzentrationen einfließen kann.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine Anordnung eines Katalysatorsystems in einem Abgaskanal einer Verbrennungskraftmaschine;
- Figur 2: einen Verlauf einer NO_{X}-Konzentration nach einem NO_{X}-Speicherkatalysator zu einer kumulierten NO_{X}-Emission vor einem NO_{X}-Speicherkatalysator bei verschiedenen Entschwefelungsdauern eines NO_{X}-Speicherkatalysators;
- Figur 3: einen weiteren Verlauf einer NO_{X}-Konzentration nach einem NO_{X}-Speicherkatalysator zu einer kumulierten NO_{X}-Emission vor einem NO_{X}-Speicherkatalysator bei verschiedenen Entschwefelungsdauern eines NO_{X}-Speicherkatalysators und
- Figur 4: ein schematisches Blockschaltbild zur Initiierung und Überwachung einer Entschwefelung von NO_{X}-Speicherkatalysatoren.

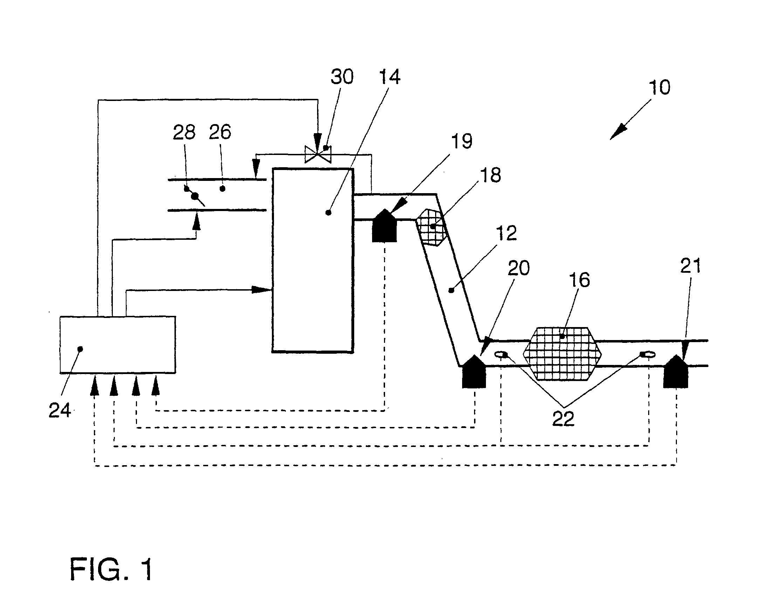

In der Figur 1 ist in schematischer Weise eine Anordnung eines Katalysatorsystems 10 in einem Abgaskanal 12 einer Verbrennungskraftmaschine 14 dargestellt. Das Katalysatorsystem 10 umfaßt einen NO_{X}-Speicherkatalysator 16 und einen Vorkatalysator 18 sowie die Temperatursensoren 22.

Ferner sind dem Katalysatorsystem 10 Gassensoren 19, 20, 21 zugeordnet, die einen Gehalt einer Gaskomponente am Abgas erfassen können. Geeignet sind beispielsweise Lambdasonden oder komponentenspezifische Sensoren. Dabei ermöglicht der Gassensor 21 zumindest eine Erfassung einer NO_{X}-Konzentration und ist somit zumindest ein NO_{X}-Sensor.

Ein Arbeitsmodus der Verbrennungskraftmaschine 14 kann mittels eines Motorsteuergerätes 24 geregelt werden. Wird beispielsweise ein Arbeitsmodus mit λ < 1 (fette Atmosphäre) gewünscht, so muß eine Sauerstoffmasse in einem Saugrohr 26 vor einer Verbrennung eines Kraftstoff-Luft-Gemisches gesenkt werden. Damit erhöhen sich die Anteile reduzierender Gaskomponenten im Abgas im Vergleich zu einem Anteil an Sauerstoff. Beispielsweise kann ein solcher Arbeitsmodus durch eine Reduzierung eines Volumenstroms angesaugter Luft mittels einer Drosselklappe 28 und durch gleichzeitige Zuführung sauerstoffarmen Abgases über ein Abgasrückflußventil 30 erfolgen.

Während eines Verbrennungsvorganges werden in wechselnden Anteilen gasförmige Schadstoffe, wie CO, HC, NO_{X} oder SO_{X}, gebildet. Die reduzierenden Gaskomponenten CO und H₂ werden - zumindest teilweise - durch Sauerstoff an dem Vorkatalysator 18 oxidiert.

In einem Arbeitsmodus mit λ > 1 (magere Atmosphäre) wird neben NO_{X} auch SO_{X} im NO_{X}-Speicherkatalysator 16 absorbiert, während die geringen Anteile reduzierender Gaskomponenten fast vollständig im Vorkatalysator 18 umgesetzt werden. In Abhängigkeit von einer Kapazität und einer Desorptionstemperatur des NO_{X}-Speicherkatalysators 16 muß die Verbrennungskraftmaschine 14 zur Regeneration mit λ **≤** 1 betrieben werden. In einem solchen Arbeitsmodus wird das zuvor absorbierte NO_{X} an einer katalytisch aktiven Oberfläche des NO_{X}-Speicherkatalysators 16 reduziert.

Ebenfalls absorbiertes SO_{X} wird in Form von Sulfat in dem NO_{X}-Speicherkatalysator 16 eingelagert, wobei allerdings eine Reversibilität dieses Einlagerungsprozesses im Gegensatz zu der Einlagerung von NO_{X} wesentlich höhere Temperaturen erfordert. Somit muß zur Entschwefelung eine Mindestentschwefelungstemperatur und ein Lambdawert λ ≤ 1 vorliegen (Regenerationsparameter). Mittels einer zumindest temporären Beeinflussung wenigstens eines Betriebsparameters der Verbrennungskraftmaschine 14 kann eine Abgastemperatur erhöht werden und der Speicherkatalysator 16 auf die Mindesttemperatur aufgeheizt werden.

Eine Entschwefelungsnotwendigkeit ergibt sich aus einer Effizienz des NO_{X}-Speicherkatalysators 16 für eine Konvertierungsreaktion von NO_{X}. Die Erfassung der Effizienz kann mit Hilfe des Gassensors 21 erfolgen, der die NO_{X}-Konzentration hinter dem NO_{X}-Speicherkatalysator 16 mißt. Aufgrund von Erfahrungswerten oder über eine Messung der NO_{X}-Konzentration vor dem NO_{X}-Speicherkatalysator 16 - beispielsweise mit einem oder den beiden Gassensoren 19, 20 - kann eine NO_{X}-Effizienz des NO_{X}-Speicherkatalysators 16 und damit auf indirektem Wege ein Verschwefelungsgrad des NO_{X}-Katalysators 16 bestimmt werden. Über die Temperatursensoren 22 läßt sich eine aktuelle Temperatur (Katalysatortemperatur) am NO_{X}-Speicherkatalysator 16 erfassen.

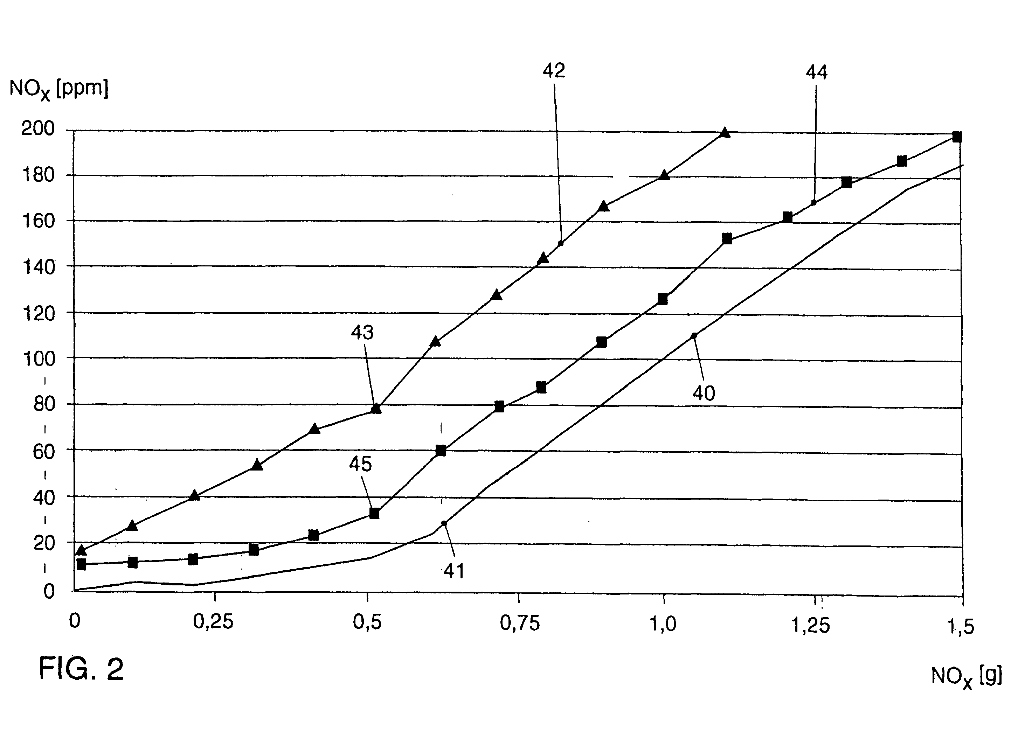

In der Figur 2 ist ein Verlauf der NO_{X}-Konzentration nach dem NO_{X}-Speicherkatalysator 16 zu einer kumulierten NO_{X}-Emission vor dem NO_{X}-Speicherkatalysator 16 nach einer zumindest nahezu vollständigen NO_{X}-Regeneration und nach dem Wechsel in den mageren Arbeitsmodus der Verbrennungskraftmaschine 14 aufgetragen. Eine Kurve 40 gibt dabei den Verlauf der NO_{X}-Konzentration für einen zumindest nahezu schwefelfreien NO_{X}-Speicherkatalysator 16 wieder, während die Kurven 42, 44 nach einer Beladung des Speicherkatalysators 16 mit jeweils einer definierten Menge an Schwefel aufgenommen wurden. Der NO_{X}-Speicherkatalysator 16 kann gleichzeitig ein 3-Wege-Katalysator sein, das heißt, er kann Katalysatorkomponenten aufweisen, die bei stöchiometrischem Abgas eine Konvertierung der reduzierenden Gaskomponenten und von NO_{X} erlauben.

Vor einer Aufnahme der Kurven 40, 42, 44 wurde die Verbrennungskraftmaschine 14 zunächst für 60 s auf einen Arbeitsmodus mit λ = 0,9 bei einer Katalysatortemperatur von zirka 350 °C eingestellt, um die NO_{X}-Regeneration einzuleiten. Anschließend wurde der magere Arbeitsmodus mit λ = 2,2 für zirka 300 s eingestellt, bei dem die Messungen erfolgten. Die kumulierte Emission von NO_{X} vor dem NO_{X}-Speicherkatalysator 16 läßt sich aus der Raumgeschwindigkeit des Abgases und den gemessenen oder anhand von Erfahrungswerten geschätzten Konzentrationen vor dem Speicherkatalysator 16 berechnen. Unter den in diesen Ausführungsbeispielen genannten Betriebsparametern beträgt die Konzentration des NO_{X} unmittelbar vor dem NO_{X}-Speicherkatalysator 16 zirka 1250 ppm.

Gemäß der Kurve 40 ist die NO_{X}-Konzentration zu Beginn des mageren Arbeitsmodus hinter dem Speicherkatalysator 16 sehr gering. So liegt bis zu einer kumulierten Emission vor dem NO_{X}-Speicherkatalysator 16 von zirka 0,25 g lediglich eine Konzentration von < 10 ppm vor, die allmählich bis zu einer kumulierten Emission vor dem NO_{X}-Speicherkatalysator 16 von 0,6 g auf einen Wert von 20 ppm ansteigt. In diesem Bereich wird NO_{X} nahezu vollständig von dem NO_{X}-Speicherkatalysator 16 absorbiert. Mit zunehmender NO_{X}-Beladung und abnehmender NO_{X}-Speicherfähigkeit steigt die NO_{X}-Konzentration nach dem NO_{X}-Speicherkatalysator 16 an. So wird ab der kumulierten Emission vor dem NO_{X}-Speicherkatalysator 16 von zirka 0,65 g (Sättigungspunkt 41) ein Anstieg der Konzentration von zirka 200 ppm pro Gramm NO_{X}-Emission vor dem NO_{X}-Speicherkatalysator 16 erreicht.

Der Verlauf der Kurve 42, bei der der Speicherkatalysator 16 mit zirka 3 g Schwefel beladen ist, ist dabei stark abweichend von dem Verlauf der Kurve 40. Bereits zu Beginn des Wechsels in den mageren Arbeitsmodus liegt die NO_{X}-Konzentration hinter dem Speicherkatalysator 16 bei über 15 ppm. Wird der Speicherkatalysator 16 mit einem Gramm Schwefel beladen (Kurve 44), so liegt die NO_{X}-Konzentration nach dem NO_{X}-Speicherkatalysator 16 zu Beginn des Wechsels in den mageren Arbeitsmodus bei zirka 10 ppm. Bereits zu diesem Zeitpunkt läßt sich demnach also eine starke Minderung der NO_{X}-Speicherfähigkeit detektieren.

Ein Anstieg der Kurven 42, 44 bis zum Erreichen eines jeweiligen Sättigungspunktes 43, 45 erfolgt mit einer signifikant höheren Steigung als bei dem schwefelfreien Speicherkatalysator 16 (Kurve 40). Deutlich wird hierbei, daß mit steigendem Verschwefelungsgrad der Anstieg um so rasanter verläuft. Weiterhin fällt mit zunehmendem Verschwefelungsgrad die NO_{X}-Speicherkapazität, so daß nach wesentlich geringeren kumulierten NO_{X}-Emissionen vor dem NO_{X}-Speicherkatalysator 16 bereits die Sättigungspunkte 43, 45 im Vergleich zu dem Sättigungspunkt 41 des schwefelfreien Katalysators 16 erreicht werden.

Die Kurve 40 entspricht dabei einem Verlauf der Sollkonzentration, wenn der Speicherkatalysator 16 weder reversible noch irreversible Schädigungen aufweist. Aus einer Abweichung hinsichtlich der Lage der Sättigungspunkte 43, 45 und/oder dem Anstieg unmittelbar nach dem Wechsel des Arbeitsmodus und/oder einer Lage der Konzentration unmittelbar nach dem Wechsel des Arbeitsmodus läßt sich demnach der Verschwefelungsgrad und damit die Entschwefelungsnotwendigkeit bestimmen.

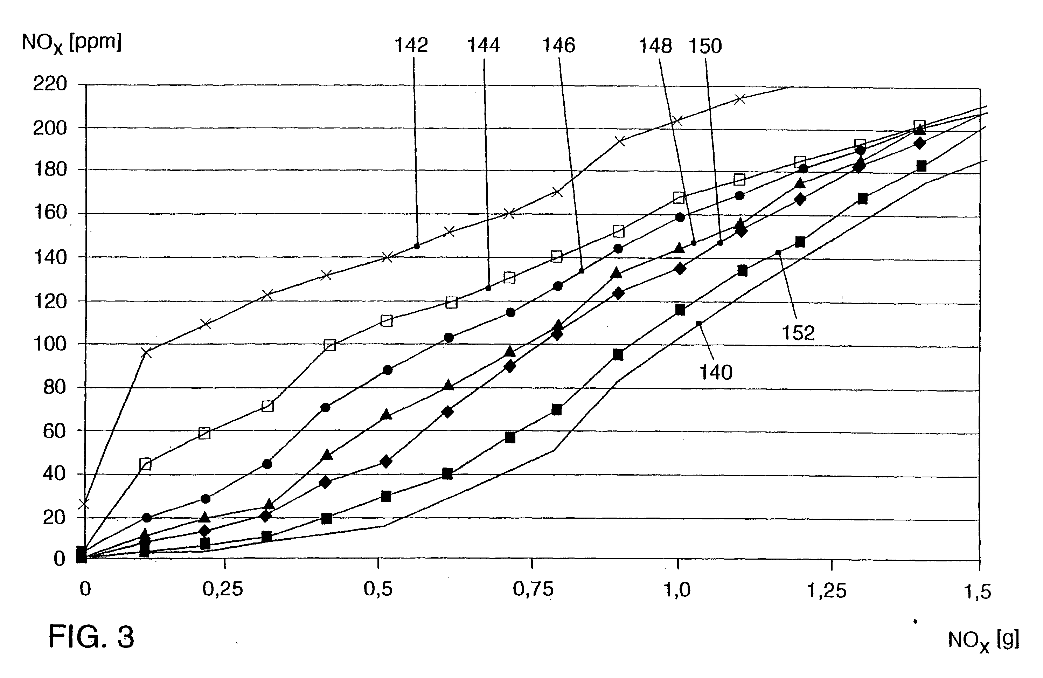

Figur 3 zeigt eine Motorprüfstandsuntersuchung an dem NO_{X}-Speicherkatalysator 16. Der NO_{X}-Speicherkatalysator 16 wird in einem zumindest nahezu schwefelfreien Zustand, das heißt, die im NO_{X}-Speicherkatalysator 16 eingelagerte Schwefelmasse beträgt weniger als 0,5 g, mit 3 g Schwefel beladen und anschließend sukzessiv entschwefelt, wobei die Entschwefelungsdauer in einem Bereich von 10 s bis 200 s festgelegt wird. Die Regenerationsparameter werden auf λ = 0,95 und eine mittlere Katalysatortemperatur von 625 °C festgelegt. Die Figur 3 zeigt einen Verlauf der NO_{X}-Konzentration hinter dem NO_{X}-Speicherkatalysator 16 im Verhältnis zu der kumulierten NO_{X}-Emission vor dem NO_{X}-Speicherkatalysator 16. Die Kurve 140 gibt dabei den Verlauf vor der Beladung mit Schwefel wieder, während die Kurve 142 den Verlauf nach der Schwefelbeladung und vor einer Entschwefelung zeigt. Die Kurven 144, 146, 148, 150, 152 stellen jeweils Teilentschwefelungszustände mit einem bestimmten Verschwefelungsgrad des NO_{X}-Speicherkatalysators 16 dar.

Vor der jeweiligen Messung der NO_{X}-Konzentration beziehungsweise NO_{X}-Emissionen wurde die Verbrennungskraftmaschine 14 zur Gewährleistung einer vollständigen NO_{X}-Regeneration 60 s lang in einem Arbeitsmodus mit λ = 0,9 bei einer Abgastemperatur vor dem NO_{X}-Speicherkatalysator 16 von zirka 350 °C geschaltet. Bei diesen Temperaturen tritt keinerlei Entschwefelung ein. Nach der NO_{X}-Regeneration erfolgt wiederum ein Wechsel in einen Betriebspunkt mit magerem Arbeitsmodus mit λ = 2,2, wobei unmittelbar nach Beginn dieses Arbeitsmodus die NO_{X}-Konzentration beziehungsweise die NO_{X}-Emission erfaßt wird. Die Verbrennungskraftmaschine 14 ist dabei derart eingestellt, daß eine Konzentration des NO_{X} unmittelbar hinter der Verbrennungskraftmaschine 14 bei zirka 1250 ppm liegt.

Gemäß der Kurve 140 ist die NO_{X}-Konzentration zu Beginn des mageren Arbeitsmodus hinter dem NO_{X}-Speicherkatalysator 16 sehr gering. So liegt bis zu einer kumulierten NO_{X}-Emission vor dem NO_{X}-Speicherkatalysator 16 von 0,35 g lediglich eine NO_{X}-Konzentration von < 10 ppm hinter dem NO_{X}-Speicherkatalysator 16 vor, die allmählich bis zu einer kumulierten NO_{X}-Emission von 0,5 g auf einen Wert von 20 ppm ansteigt. In diesem Bereich wird also NO_{X} nahezu vollständig von dem NO_{X}-Speicherkatalysator 16 absorbiert. Mit zunehmender NO_{X}-Beladung und abnehmender NO_{X}-Speicherfähigkeit steigt die NO_{X}-Konzentration hinter dem NO_{X}-Speicherkatalysator 16 an. So wird ab einer kumulierten NO_{X}-Emission vor dem NO_{X}-Speicherkatalysator 16 von zirka 0,5 g (Sättigungspunkt) ein Anstieg der NO_{X}-Konzentration hinter dem NO_{X}-Speicherkatalysator 16 von zirka 200 ppm pro Gramm kumulierter NO_{X}-Emission vor dem NO_{X}-Speicherkatalysator 16 erreicht.

Der Verlauf der Kurve 142, bei der der NO_{X}-Speicherkatalysator 16 mit zirka 3 g Schwefel beladen ist, ist dabei stark abweichend von dem Verlauf der Kurve 140 für den nicht verschwefelten NO_{X}-Speicherkatalysator 16. Bereits zu Beginn des Wechsels in den mageren Arbeitsmodus beträgt die NO_{X}-Konzentration hinter dem NO_{X}-Speicherkatalysator 16 bis zu 30 ppm. Bis zu einer kumulierten NO_{X}-Emission vor dem NO_{X}-Speicherkatalysator 16 von zirka 0,1 g steigt sie rapide auf einen Wert von zirka 100 ppm an, um dann im weiteren Verlauf mit einem Anstieg von zirka 200 ppm pro Gramm kumulierter NO_{X}-Emission vor dem NO_{X}-Speicherkatalysator 16 in etwa dem Konzentrationsanstieg des nicht verschwefelten NO_{X}-Speicherkatalysators 16 ab dem Sättigungspunkt zu entsprechen. Der rasante Anstieg zu Beginn des mageren Arbeitsmodus bis zu zirka 0,1 g NO_{X}-Emission vor dem NO_{X}-Speicherkatalysator 16 beruht bereits auf einer starken Verminderung der NO_{X}-Speicherfähigkeit. Daß dieser Anstieg der NO_{X}-Konzentration hinter dem NO_{X}-Speicherkatalysator 16 über der des Anstieges der NO_{X}-Konzentration hinter dem NO_{X}-Speicherkatalysator 16 bei höheren kumulierten NO_{X}-Emissionen vor dem NO_{X}-Speicherkatalysator 16 liegt, ist durch die zumindest teilweise Beladung der NO_{X}-Speicherplätze mit Sulfaten im oberflächennahen Bereich des NO_{X}-Speicherkatalysators 16 (Washcoats) erklärbar. Derartige NO_{X}-Durchbrüche machen sich bei einem schwefelfreien NO_{X}-Speicherkatalysator 16 aufgrund der hohen NO_{X}-Speicherfähigkeit nicht bemerkbar und sind damit charakteristisch für hohe Verschwefelungsgrade.

Wird der NO_{X}-Speicherkatalysator 16 nach der Beladung mit Schwefel für zirka 10 s den SO_{X}-Regenerationsparametern unterworfen, so ergibt sich nach dem erneuten Wechsel in den mageren Arbeitsmodus die Kurve 144. Entsprechend ergibt sich ein Verlauf der Kurven für die Entschwefelung nach zirka 20 s (Kurve 146), zirka 30 s (Kurve 148), zirka 50 s (Kurve 150) und zirka 100 s (Kurve 152). Deutlich wird, daß der Anfangswert der NO_{X}-Konzentration hinter dem NO_{X}-Speicherkatalysator 16 und der nachfolgende Anstieg der NO_{X}-Konzentration hinter dem NO_{X}-Speicherkatalysator 16 zu Beginn des Wechsels in den mageren Arbeitsmodus abfällt.

Wird der NO_{X}-Speicherkatalysator 16 für eine Entschwefelungsdauer von zirka 200 s mit einem den SO_{X}-Regenerationsparametern entsprechenden Abgas beaufschlagt, so ergibt sich eine Kurve, die in ihrem Verlauf der Kurve 140, also einem vollständig entschwefelten NO_{X}-Speicherkatalysator 16 mit allenfalls geringen, im Bereich von Meßstreuungen liegenden Abweichungen, entspricht.

Über die Kurven 142 bis 152 lassen sich demnach die Teilentschwefelungszustände, das heißt der Verschwefelungsgrad des NO_{X}-Speicherkatalysators 16, nach der Entschwefelung bestimmen. Der Verlauf der Kurven 40 und 140 kann anhand eines NO_{X}-Speicherkatalysatormodells, einer gemessenen oder berechneten NO_{X}-Emission der Verbrennungskraftmaschine und dem vorliegenden Lambdawert vor dem NO_{X}-Speicherkatalysator 16 berechnet werden. Die Kurven 40 und 140 liefern dann eine Größe und/oder einen Verlauf einer NO_{X}-Sollkonzentration für eine vollständige Entschwefelung. Ein Vergleich mit einer Größe und/oder einem Verlauf einer gemessenen NO_{X}-Konzentration erlaubt Rückschlüsse auf den Katalysatorzustand. Sinngemäß gilt dies hier und im folgenden auch für einen Emissionsvergleich.

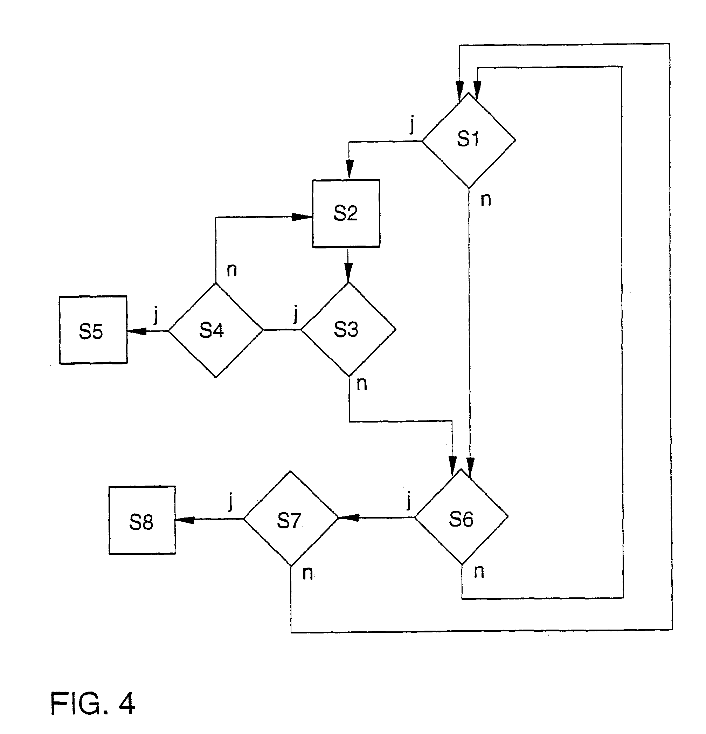

In der Figur 4 ist ein Blockschaltbild für einen Ablauf der Initiierung und Überwachung der Entschwefelung des NO_{X}-Speicherkatalysators 16 beispielhaft dargestellt. Zumindest ein erster Schwellenwert wird vor einem Ergreifen einer ersten Entschwefelungsmaßnahme festgelegt, und dieser wird mit einem gemessenen Wert oder Verlauf einer NO_{X}-Konzentration nach dem NO_{X}-Speicherkatalysator 16 verglichen (Schritt S₁). Übersteigt die gemessene NO_{X}-Konzentration den ersten Schwellenwert, so wird in einem Schritt S₂ die erste Entschwefelungsmaßnahme durchgeführt. Nach dieser ersten Entschwefelungsmaßnahme findet ein erneuter Vergleich der gemessenen NO_{X}-Konzentration nach dem NO_{X}-Speicherkatalysator 16 mit einem neu vorgebbaren zweiten Schwellenwert statt (Schritt S3). Dieser zweite Schwellenwert kann in Abhängigkeit von dem ersten Schwellenwert und/oder von der gegebenenfalls ergriffenen ersten Entschwefelungsmaßnahme festgelegt werden. Üblicherweise wird der zweite Schwellenwert derart festgelegt, daß bereits geringere Abweichungen zwischen der gemessenen NO_{X}-Konzentration nach dem NO_{X}-Speicherkatalysator 16 und der vorgebbaren NO_{X}-Sollkonzentration eines zumindest nahezu schwefelfreien NO_{X}-Speicherkatalysators 16 als beim ersten Schwellenwert zur Initiierung einer erneuten Entschwefelungsmaßnahme führen. Dieser zweite Schwellenwert definiert somit eine Verschwefelungsgrenze, bei deren Unterschreiten ein möglichst unverzügliches erneutes Einleiten einer Entschwefelung nicht mehr erforderlich ist.

In die Schleife zwischen der Einleitung einer Entschwefelung (Schritt S2) und der Abfrage nach Unterschreiten des zweiten Schwellenwertes (Schritt S3) wird in einem Schritt S4 die Abfrage nach einer unmittelbar zuvor durchgeführten Entschwefelung eingebunden. Damit wird eine endlose Abfolge von Entschwefelungen dahingehend unterbrochen, daß nach einer zweiten Entschwefelung im Schritt S2 und erneutem Überschreiten des vorgebbaren zweiten Schwellenwertes (Schritt S3) der NO_{X}-Speicherkatalysator als geschädigt erkannt wird und eine entsprechende Information im Schritt S5 an eine Katalysatorüberwachung (On-Board-Diagnose) übermittelt wird. Maßnahmen, die nach einer erkannten Katalysatorschädigung eingeleitet werden können, sind bekannt und sollen hier nicht näher erläutert werden.

Wird nach spätestens einer zweiten Entschwefelung (Schritt S2) der vorgebbare zweite Schwellenwert unterschritten (Schritt S3), so wird in einem Schritt S6 geprüft, ob ein vorgebbarer dritter Schwellenwert unterschritten wird. Üblicherweise wird der dritte Schwellenwert auf geringere vorstehend beschriebene Abweichungen als beim ersten und zweiten Schwellenwert festgelegt. Dieser dritte Schwellenwert definiert somit eine Verschwefelungsgrenze, bei deren Unterschreiten von einer zumindest nahezu vollständigen Entschwefelung ausgegangen werden kann.

Wird nach zumindest einer Entschwefelung im Schritt S2 und Unterschreiten des zweiten Schwellenwertes im Schritt S3 der dritte Schwellenwert im Schritt S6 nicht unterschritten, so ist bei der oder den Entschwefelungen nicht eine zumindest nahezu vollständige Entschwefelung des NO_{X}-Speicherkatalysators, sondern lediglich eine weitgehende Entschwefelung erfolgt. In einem Schritt S7 wird daher analog zu Schritt S4 zunächst geprüft, ob zumindest eine Entschwefelung unmittelbar zuvor durchgeführt wurde. Ist dies der Fall, so wird in Schritt S8 eine entsprechende Information an die Katalysatorüberwachung (On-Board-Diagnose) übermittelt. Maßnahmen, wie sie bei einer erkannten Katalysatorschädigung eingeleitet werden, sind jedoch im Gegensatz zu Schritt S5 nicht erforderlich.

Selbstverständlich kann der geschilderte Ablauf dahingehend modifiziert werden, daß die Zahl der zulässigen Entschwefelungsvorgänge statt mit einem vorgebbaren zweiten Schwellenwert für beliebig viele vorgebbare Schwellenwerte festgelegt wird.

Ebenso ist es möglich, anstelle des Vergleiches von Konzentration mit Sollkonzentrationen, beispielsweise eine kumulierte Emission, eine Zeitspanne bis zum Erreichen einer vorgebbaren Emission oder Konzentration, einen NO_{X}-Umsatz oder dergleichen, mit entsprechenden Sollwerten zu vergleichen.

In bevorzugter Weise werden die vorgebbaren Schwellenwerte für eine Größe oder einen Verlauf der Abweichung der gemessenen NO_{X}-Konzentration nach dem NO_{X}-Speicherkatalysator 16 in Abhängigkeit der NO_{X}-Sollkonzentration gebildet. Die Schwellenwerte können aber auch durch NO_{X}-konzentrationsabhängige Größen bestimmt werden. So ist es denkbar, einen NO_{X}-Umsatz als Quotient der Differenz der NO_{X}-Konzentration vor und hinter dem NO_{X}-Speicherkatalysator 16 und der NO_{X}-Konzentration vor dem NO_{X}-Speicherkatalysator 16 zu ermitteln und mit einem NO_{X}-Sollumsatz zu vergleichen.

Der erste Schwellenwert für die Initiierung der Entschwefelung liegt bei mindestens 85 %, insbesondere bei mindestens 90 %, des NO_{X}-Sollumsatzes am zumindest nahezu vollständig entschwefelten NO_{X}-Speicherkatalysator 16. Der zweite Schwellenwert für die erneute Initiierung der Entschwefelung liegt bei mindestens 93 %, insbesondere bei mindestens 96 %, des NO_{X}-Sollumsatzes am zumindest nahezu schwefelfreien NO_{X}-Speicherkatalysator 16. Der dritte Schwellenwert für das Erkennen einer nahezu vollständigen Entschwefelung liegt bei mindestens 97 %, insbesondere bei mindestens 99 %, des NO_{X}-Sollumsatzes am zumindest nahezu vollständig entschwefelten NO_{X}-Speicherkatalysator 16.

Ferner ist denkbar, die Schwellenwerte in Abhängigkeit von einem mittleren Anstieg der NO_{X}-Konzentrationen nach dem NO_{X}-Speicherkatalysator 16 in wenigstens einem vorgebbaren NO_{X}-Emissionsbereich zu bestimmen.

Ist dabei als erster Schwellenwert der Anstieg der NO_{X}-Konzentration nach dem NO_{X}-Speicherkatalysator 16 zu Beginn einer Magerphase nach der zumindest nahezu vollständigen NO_{X}-Regeneration um einen Faktor f₁ ≥ 4, insbesondere um einen Faktor f₁ ≥ 4, größer als der Anstieg der NO_{X}-Konzentration nach dem NO_{X}-Speicherkatalysator 16 des zumindest nahezu schwefelfreien NO_{X}-Speicherkatalysator 16 (NO_{X}-Sollkonzentration), so wird die Entschwefelung initiiert. Für den zweiten Schwellenwert wird bevorzugt der Faktor f₁ auf f₁ ≥ 3 festgelegt. Eine zumindest nahezu vollständige Entschwefelung ist erreicht, wenn als dritter Schwellenwert der Faktor f₁ einen Wert von 2, insbesondere von 1,3, unterschreitet.

Weiterhin ist denkbar, den ersten Schwellenwert für die Initiierung der Entschwefelung derart festzulegen, daß er einer NO_{X}-Konzentration entspricht, die nach der zumindest nahezu vollständigen NO_{X}-Regeneration höchstens um 10 %, insbesondere um 5%, der NO_{X}-Konzentration vor dem NO_{X}-Speicherkatalysator 16 über der Konzentration nach dem NO_{X}-Speicherkatalysator 16 des zumindest nahezu schwefelfreien NO_{X}-Speicherkatalysators 16 (NO_{X}-Sollkonzentration) liegt. Ein erneutes Einleiten der Entschwefelung ist nicht erforderlich, wenn als zweiter Schwellenwert die NO_{X}-Konzentration nach dem NO_{X}-Speicherkatalysator 16 um höchstens 2,5 % der NO_{X}-Konzentration vor dem NO_{X}-Speicherkatalysator 16, insbesondere um höchstens 1,5 %, der NO_{X}-Konzentration vor dem NO_{X}-Speicherkatalysator 16 über der NO_{X}-Sollkonzentration liegt. Eine zumindest nahezu vollständige Entschwefelung liegt vor, wenn als dritter Schwellenwert die NO_{X}-Konzentration nach dem NO_{X}-Speicherkatalysator 16 nach der zumindest nahezu vollständigen NO_{X}-Regeneration höchstens um 1 %, insbesondere um 0,5 %, über der Konzentration nach dem NO_{X}-Speicherkatalysator 16 des zumindest nahezu schwefelfreien NO_{X}-Speicherkatalysators 16 (NO_{X}-Sollkonzentration) liegt.

Des weiteren kann zur Festlegung der Schwellenwerte eine Messung einer Zeitspanne dienen, nach der eine vorgebbare NO_{X}-Konzentration stromab des NO_{X}-Speicherkatalysators 16 überschritten wird. Die gemessene Zeitspanne wird mit einer Sollzeitspanne für einen schwefelfreien NO_{X}-Speicherkatalysator 16 verglichen.

Der erste Schwellenwert wird hierzu bevorzugt auf 30 % bis 60 %, insbesondere 50 % bis 60 %, der Sollzeitspanne festgelegt. Unterschreitet die gemessene Zeitspanne den ersten Schwellenwert, so wird die Entchwefelung eingeleitet. Ein erneutes Einleiten der Entschwefelung ist nicht erforderlich, wenn die gemessene Zeitspanne mindestens 75 % bis 85 %, insbesondere 80 % bis 85 % (zweiter Schwellenwert), der Sollzeitspanne entspricht. Eine zumindest nahezu vollständige Entschwefelung liegt vor, wenn als dritter Schwellenwert die gemessene Zeitspanne einen Wert von 90 % bis 99 %, insbesondere 95 % bis 99 %, der Sollzeitspanne nicht unterschreitet.

In gleicher Weise kann eine Zeitspanne bis zum Erreichen einer vorgebbaren kumulierten NO_{X}-Emission nach dem NO_{X}-Speicherkatalysator 16 zu einer Sollzeitspanne für das Erreichen einer kumulierten NO_{X}-Sollemission nach dem NO_{X}-Speicherkatalysator 16 in gleicher Höhe verwendet werden.

Aus Gründen der Reproduzierbarkeit und wegen der Genauigkeit von NO_{X}-Sensoren sollten bei einem Ist-Soll-Vergleich dieser Zeitintervalle die zu überschreitenden NO_{X}-Konzentrationen nach dem NO_{X}-Speicherkatalysator 16 bei 20 ppm bis 300 ppm, insbesondere 30 ppm bis 150 ppm, liegen, und die zu überschreitenden kumulierten NO_{X}-Emissionen nach dem NO_{X}-Speicherkatalysator 16 sollten bei 1 % bis 10 %, insbesondere 2 % bis 5 %, der kumulierten NO_{X}-Emissionen vor dem NO_{X}-Speicherkatalysator 16 liegen.

Insgesamt kann auf diese Weise der Verschwefelungsgrad des NO_{X}-Speicherkatalysators 16 erfaßt werden, und dieser kann in eine Berechnung einer Entschwefelungsnotwendigkeit und/oder der Regenerationsparameter einfließen.

Wird auch nach einer wiederholten Entschwefelung eine gleichbleibende Abweichung von einem Verlauf eines schwefelfreien NO_{X}-Speicherkatalysators 16 detektiert, so kann auf ein Vorliegen einer irreversiblen Schädigung des NO_{X}-Katalysators 16 geschlossen werden. Diese Abweichung kann dann als ein Korrekturwert zur Neufestlegung der Regenerationsparameter und/oder der Entschwefelungsnotwendigkeit einfließen.

## Patentansprüche

1. Verfahren zur Initiierung und Überwachung einer Entschwefelung von wenigstens einem in einem Abgaskanal einer Verbrennungskraftmaschine (14) angeordneten NO_{X}-Speicherkatalysator (16), wobei durch einen stromab des NO_{X}-Speicherkatalysators (16) angeordneten NO_{X}-Sensor (21) eine NO_{X}-Konzentration eines Abgases erfaßt wird und zur Entschwefelung eine Mindesttemperatur am NO_{X}-Speicherkatalysator (16) sowie ein Arbeitsmodus der Verbrennungskraftmaschine (14) mit λ ≤ 1 eingestellt wird und wobei
(a) in einem mageren Arbeitsmodüs der Verbrennungskraftmaschine (14) mit λ > 1 eine Größe und/oder ein Verlauf der NO_{X}-Konzentration von dem NO_{X}-Sensor (21) erfaßt und mit einer Größe und/oder einem Verlauf einer vorgebbaren NO_{X}-Sollkonzentration verglichen wird,
(b) ein erster vorgebbarer Schwellenwert für eine Größe oder einen Verlauf einer Abweichung der NO_{X}-Konzentration von der NO_{X}-Sollkonzentration gebildet wird, und beim Überschreiten des ersten Schwellenwertes eine erste Entschwefelungsmaßnahme ergriffen wird,
**dadurch gekennzeichnet, daß**
(c) ein zweiter vorgebbarer Schwellenwert für eine Größe oder einen Verlauf der Abweichung der NO_{X}-Konzentration von der NO_{X}-Sollkonzentration gebildet wird, und beim Überschreiten des zweiten Schwellenwertes unmittelbar nach der ersten Entschwefelung eine zweite Entschwefelungsmaßnahme ergriffen wird.

2. Verfahren nach Anspruch 1, **dadurch gekennzeichnet, daß** ein dritter vorgebbarer Schwellenwert für die Größe oder den Verlauf der Abweichung der NO_{X}-Konzentration von der NO_{X}-Sollkonzentration gebildet wird, und daß beim Unterschreiten des dritten Schwellenwertes unmittelbar nach einer ersten oder zweiten Entschwefelung ein zumindest nahezu vollständig entschwefelter NO_{X}-Speicherkatalysator (16) erkannt wird.

3. Verfahren nach Anspruch 1 oder 2, **dadurch gekennzeichnet, daß** der erste Schwellenwert für die NO_{X}-Konzentration höchstens 10 %, insbesondere 5 %, über der Sollkonzentration liegt.

4. Verfahren nach einem der vorhergehenden Ansprüche, **dadurch gekennzeichnet, daß** der zweite Schwellenwert für die NO_{X}-Konzentration höchstens 2,5 %, insbesondere 1,5 %, über der Sollkonzentration liegt.

5. Verfahren nach einem der Ansprüche 2 bis 4, **dadurch gekennzeichnet, daß** der dritte Schwellenwert für die NO_{X}-Konzentration höchstens 1 %, insbesondere 0,5 %, über der Sollkonzentration liegt.

6. Verfahren nach Anspruch 1 oder 2, **dadurch gekennzeichnet, daß** der erste Schwellenwert als ein NO_{X}-Umsatz festgelegt wird, der höchstens 15 %, insbesondere höchstens 10 %, unter einem NO_{X}-Sollumsatz im NO_{X}-Speicherkatalysator (16) liegt.

7. Verfahren nach einem der vorhergehenden Ansprüche, **dadurch gekennzeichnet, daß** der zweite Schwellenwert für den NO_{X}-Umsatz höchstens 7 %, insbesondere höchstens 4 % unter dem NO_{X}-Sollumsatz liegt.

8. Verfahren nach einem der Ansprüche 2 bis 7, **dadurch gekennzeichnet, daß** der dritte Schwellenwert des NO_{X}-Umsatzes höchstens 3 %, insbesondere höchstens 1 % unter dem NO_{X}-Sollumsatzes liegt.

9. Verfahren nach Anspruch 1 oder 2, **dadurch gekennzeichnet, daß** ein mittlerer Anstieg der gemessenen Konzentration in einem vorgebbaren Emissionsbereich mit einem mittleren Anstieg der Sollkonzentration in dem Emissionsbereich verglichen wird.

10. Verfahren nach Anspruch 9, **dadurch gekennzeichnet, daß** der mittlere Anstieg der Konzentration zur Festlegung des ersten Schwellenwertes um einen Faktor f₁ ≥ 7, insbesondere um einen Faktor f₁ ≥ 4, den mittleren Anstieg der Sollkonzentration übersteigt.

11. Verfahren nach Anspruch 9 oder 10, **dadurch gekennzeichnet, daß** der mittlere Anstieg der Konzentration zur Festlegung des zweiten Schwellenwertes um einen Faktor f₁ ≥ 3 den mittleren Anstieg der Sollkonzentration übersteigt.

12. Verfahren nach einem der Ansprüche 9 bis 11, **dadurch gekennzeichnet, daß** der mittlere Anstieg der Konzentration zur Festlegung des dritten Schwellenwertes um einen Faktor f₁ ≥ 2, insbesondere um einen Faktor f₁ ≥ 1,3, den mittleren Anstieg der Sollkonzentration übersteigt.

13. Verfahren nach Anspruch 1 oder 2, **dadurch gekennzeichnet, daß** eine Zeitspanne bis zum Erreichen einer vorgebbaren NO_{X}-Konzentration stromab des NO_{X}-Speicherkatalysators (16) mit einer Sollzeitspanne für das Erreichen der vorgebbaren NO_{X}-Konzentration verglichen wird.

14. Verfahren nach Anspruch 13, **dadurch gekennzeichnet, daß** der erste Schwellenwert für die gemessene Zeitspanne auf 30 % bis 60 %, insbesondere 50 % bis 60 %, der Sollzeitspanne festgelegt wird.

15. Verfahren nach Anspruch 13 oder 14, **dadurch gekennzeichnet, daß** der zweite Schwellenwert für die gemessene Zeitspanne auf 75 % bis 85 %, insbesondere 80 % bis 85 %, der Sollzeitspanne festgelegt wird.

16. Verfahren nach einem der Ansprüche 13 bis 15, **dadurch gekennzeichnet, daß** der dritte Schwellenwert für die gemessene Zeitspanne auf 90 % bis 99 %, insbesondere 95 % bis 99 %, der Sollzeitspanne festgelegt wird.

17. Verfahren nach einem der vorhergehenden Ansprüche, **dadurch gekennzeichnet, daß** eine Meßwerterfassung unmittelbar nach einem Wechsel in den mageren Arbeitsmodus oder nach Ablauf einer vorgebbaren Zeitspanne nach dem Wechsel in den mageren Arbeitsmodus erfolgt.

## Claims

1. Method for initiating and monitoring a desulfuring of at least one NOₓ storage catalyst (16) arranged in an exhaust duct of a combustion engine (14), wherein an NOₓ concentration of an exhaust gas is registered by an NOₓ sensor (21) arranged downstream of the NOₓ storage catalyst (16), wherein a minimum desulfuring temperature at the NOₓ storage catalyst (16) is set, and an operating mode of the combustion engine (14) with λ ≤ 1 is set for desulfuring, wherein
(a) in a lean operating mode of the combustion. engine (14) with λ > 1, a value and/or an evolution of the NOₓ concentration is registered by the NOₓ sensor (21) and compared with a value and/or an evolution of a predeterminable target NOₓ concentration,
(b) a first, predeterminable threshold for a value or an evolution of the deviation of the NOₓ concentration from the target NOₓ concentration is formed, and, in the event of the first threshold being exceeded, a first desulfuring measure is implemented,
**characterised in that**
(c) a second predeterminable threshold for a value or an evolution of the deviation of the NOₓ concentration from the target NOₓ concentration is formed and, in the event of the second threshold being exceeded, a second desulfuring measure is implemented immediately after the first desulfuring.

2. Method according to claim 1, **characterised in that** a third predeterminable threshold for the value or the evolution of the deviation of the NOₓ concentration from the target NOₓ concentration is formed, and that, in the event of the third threshold being exceeded immediately after a first or second desulfuring, an at least almost completely desulfured NOₓ storage catalyst (16) is recognised.

3. Method according to claim 1 or 2, **characterised in that** the first threshold for the NOₓ concentration is at most 10%, in particular, 5% above the target concentration.

4. Method according to any one of the preceding claims, **characterised in that** the second threshold for the NOₓ concentration is at most 2.5%, in particular, 1.5% above the target concentration.

5. Method according to any one of claims 2 to 4, **characterised in that** the third threshold for the NOₓ filtration is at most 1%, in particular, 0.5% above the target concentration.

6. Method according to claim 1 or 2, **characterised in that** the first threshold is determined as an NOₓ conversion, which is at most 15%, in particular, at most 10% below a target NOₓ conversion in the NOₓ storage catalyst (16).

7. Method according to any one of the preceding claims, **characterised in that** the second threshold for the NOₓ conversion is at most 7%, in particular, at most 4% below the target NOₓ conversion.

8. Method according to any one of claims 2 to 7, **characterised in that** the third threshold for the NOₓ conversion is at most 3%, in particular, at most 1% below the target NOₓ conversion.

9. Method according to claim 1 or 2, **characterised in that** a mean rise in the measured concentration within a predeterminable emission range is compared with a mean rise of the target concentration within the emission range.

10. Method according to claim 9, **characterised in that** for establishing the first threshold, the mean rise in the concentration exceeds the mean rise in the target concentration by a factor of f₁ ≥ 7, in particular, by a factor of f₁ ≥ 4.

11. Method according to claim 9 or 10, **characterised in that** for establishing the second threshold, the mean rise in concentration exceeds the mean rise in the target concentration by a factor of f₁ ≥ 3.

12. Method according to any one of claims 9 to 11, **characterised in that** for establishing the third threshold, the mean rise in concentration exceeds the mean rise in the target concentration by a factor of f₁ ≥ 1.3, in particular, by a factor of f₁ ≥ 2.

13. Method according to claim 1 or 2, **characterised in that** a time span for reaching a predeterminable NOₓ concentration downstream of the NOₓ storage catalyst (16) is compared with a target time span for reaching the predeterminable NOₓ concentration.

14. Method according to claim 13, **characterised in that** the first threshold for the measured time span is determined as 30% to 60%, in particular, 50% to 60% of the target time span.

15. Method according to claim 13 or 14, **characterised in that** the second threshold for the measured time span is determined as 75% to 85%, in particular, 80% to 85% of the target time span.

16. Method according to any one of claims 13 to 15, **characterised in that** the third threshold for the measured time span is determined as 90% to 99%, in particular, 95% to 99% of the target time span.

17. Method according to any one of the preceding claims, **characterised in that** a measured value is registered immediately after switching to the lean operating mode or after the expiry of a predeterminable time span after switching to the lean operating mode.

## Revendications

1. Procédé destiné à l'initialisation et à la surveillance d'une désulfuration d'au moins un catalyseur à accumulation de NO_{X} (16) disposé dans un tuyau de gaz d'échappement d'un moteur à combustion interne (14), une concentration en NO_{X} d'un gaz d'échappement étant détectée par un détecteur de NO_{X} (21) placé en aval du catalyseur à accumulation de NO_{X} (16), et une température minimale étant réglée au niveau du catalyseur à accumulation de NO_{X} (16) pour la désulfuration, ainsi qu'un mode de fonctionnement du moteur à combustion interne (14) avec λ ≤ 1, étant précisé que
(a) dans un mode de fonctionnement en régime pauvre du moteur à combustion interne (14) à λ > 1, une grandeur et/ou une évolution de la concentration en NO_{X} est détectée par le détecteur de NO_{X} (21), et est comparée avec une grandeur et/ou une évolution de la concentration en NO_{X} pouvant être prédéterminée,
(b) une première valeur de seuil pouvant être prédéterminée est formée pour une grandeur ou une évolution d'un écart de la concentration en NOₓ par rapport à la concentration de consigne en NOₓ, et une première mesure de désulfuration étant prise lors du dépassement de la première valeur de seuil,
**caractérisé en ce que**
(c) une deuxième valeur de seuil pouvant être prédéterminée est formée pour une grandeur ou une évolution de l'écart de la concentration en NO_{X} par rapport à la concentration de consigne en NO_{X}, et **en ce que**, lors du dépassement de la deuxième valeur de seuil, une deuxième mesure de désulfuration est prise immédiatement après la première désulfuration.

2. Procédé selon la revendication 1, **caractérisé en ce qu**'une troisième valeur de seuil pouvant être prédéterminée est formée pour la grandeur ou l'évolution de l'écart de la concentration en NO_{X} par rapport à la concentration de consigne en NO_{X}, et en ce que, si la troisième valeur de seuil n'est pas atteinte immédiatement après une première ou une deuxième désulfuration, il est détecté un catalyseur à accumulation de NO_{X} (16) au moins presque entièrement désulfuré.

3. Procédé selon la revendication 1 ou 2, **caractérisé en ce que** la première valeur de seuil pour la concentration en NO_{X} est au maximum supérieure de 10 %, notamment de 5 %, à la concentration de consigne.

4. Procédé selon l'une quelconque des revendications précédentes, **caractérisé en ce que** la deuxième valeur de seuil pour la concentration en NOₓ est au maximum supérieure de 2,5 %, notamment de 1,5 %, à la concentration de consigne.

5. Procédé selon l'une quelconque des revendications 2 à 4, **caractérisé en ce que** la troisième valeur de seuil pour la concentration en NO_{X} est au maximum supérieure de 1 %, notamment de 0,5 %, à la concentration de consigne.

6. Procédé selon la revendication 1 ou 2, **caractérisé en ce que** la première valeur de seuil est définie en tant que conversion de NO_{X} qui est au maximum inférieure de 15 %, notamment au maximum de 10 %, à la conversion de consigne en NO_{X} dans le catalyseur à accumulation de NO_{X} (16).

7. Procédé selon l'une quelconque des revendications précédentes, **caractérisé en ce que** la deuxième valeur de seuil pour la conversion de NO_{X} est au maximum inférieure de 7 %, notamment au maximum de 4 %, à la conversion de consigne en NO_{X}.

8. Procédé selon l'une quelconque des revendications 2 à 7, **caractérisé en ce que** la troisième valeur de seuil de la conversion de NO_{X} est au maximum inférieure de 3 %, notamment au maximum de 1 %, à la conversion de consigne en NO_{X}.

9. Procédé selon la revendication 1 ou 2, **caractérisé en ce qu'**une augmentation moyenne de la concentration mesurée dans une plage d'émission pouvant être prédéterminée est comparée avec une augmentation moyenne de la concentration de consigne dans la plage d'émission.

10. Procédé selon la revendication 9, **caractérisé en ce que** l'augmentation moyenne de la concentration pour la définition de la première valeur de seuil est supérieure d'un facteur f₁ ≥ 7, notamment d'un facteur f₁ ≥ 4, à l'augmentation moyenne de la concentration de consigne.

11. Procédé selon la revendication 9 ou 10, **caractérisé en ce que** l'augmentation moyenne de la concentration pour la définition de la deuxième valeur de seuil est supérieure d'un facteur f₁ ≥ 3 à l'augmentation moyenne de la concentration de consigne.

12. Procédé selon l'une quelconque des revendications 9 à 11, **caractérisé en ce que** l'augmentation moyenne de la concentration pour la définition de la troisième valeur de seuil est supérieure d'un facteur f₁ ≥ 1,3, notamment d'un facteur f₁ ≥ 2, à l'augmentation moyenne de la concentration de consigne.

13. Procédé selon la revendication 1 ou 2, **c**aractérisé **en ce qu**'un intervalle de temps jusqu'à ce qu'une concentration en NO_{X} pouvant être prédéterminée soit atteinte en aval du catalyseur à accumulation de NO_{X} (16) est comparé avec un intervalle de temps de consigne pour l'atteinte de la concentration en NO_{X} pouvant être prédéterminée.

14. Procédé selon la revendication 13, **caractérisé en ce que** la première valeur de seuil pour l'intervalle de temps mesuré est définie à hauteur de 30 % à 60 %, notamment de 50 % à 60 %, de l'intervalle de temps de consigne.

15. Procédé selon la revendication 13 ou 14, **caractérisé en ce que** la deuxième valeur de seuil pour l'intervalle de temps mesuré est définie à hauteur de 75 % à 85 %, notamment de 80 % à 85 %, de l'intervalle de temps de consigne.

16. Procédé selon l'une quelconque des revendications 13 à 15, **caractérisé en ce que** la troisième valeur de seuil pour l'intervalle de temps mesuré est définie à hauteur de 90 % à 99 %, notamment de 95 % à 99 %, de l'intervalle de temps de consigne.

17. Procédé selon l'une quelconque des revendications précédentes, **caractérisé en ce qu'**une détection de valeurs de mesure est effectuée immédiatement après un changement sur le mode de fonctionnement en régime pauvre, ou à l'issue d'un intervalle de temps pouvant être prédéterminé après le changement sur le mode de fonctionnement en régime pauvre.
